# EUROPEAN PATENT APPLICATION

(11) **EP 0 876 800 A2**
(43) Date of publication of application: **11.11.1998**
(21) Application number: 98303628.6
(22) Date of filing: 08.05.1998
(51) Int. Cl.: A61C 1/14, B23B 31/20

(54) **Clamping device particularly useful for dental handpieces**

(30) Priority: 09.05.1997 IL 12081397
(71) Applicant: Cohen, Yechiel, Carmiel 20100 (IL)
(72) Inventor: Cohen, Yechiel, Carmiel 20100 (IL)
(74) Representative: Belcher, Simon James

(57) **Abstract**

A clamping device for clamping a rodlike member to a housing, such as a dental tool to a dental handpiece, is provided. The clamping device includes a sleeve carried by the housing and having an open end, a collet received within the open end of the tapered sleeve, and a coil spring. The open end of the tapered collet terminates short of the open end of the tapered sleeve and a coil spring is carried by the tapered sleeve between its open end and the open end of the tapered collet, the coil spring being coaxial with the tapered sleeve for receiving the rodlike member.

## Description

### FIELD OF THE INVENTION

The present invention relates to clamping devices for clamping a rodlike member to a housing which are particularly useful in dental handpieces for clamping the shaft of a dental tool, such as a bur or drill, to the handpiece.

### BACKGROUND OF THE INVENTION

One form of dental handpiece to which the invention is especially suitable is an air turbine handpiece for driving a dental tool, such as a bur or drill, at extremely high speeds, e.g. of the order of 400,000 rpm. In the existing air turbine handpieces, the clamping devices for clamping the dental tool shaft are generally of relatively bulky construction which increases the size and weight of the handpiece, and/or requires relatively awkward manipulations in order to remove and insert the dental tool into the handpiece.

My Published European Patent Application 94115684.6 describes a clamping device for clamping a rodlike member to a housing, comprising a tapered sleeve carried by the housing and having an inner diameter which decreases from an open end thereof to its opposite end; and a tapered collet received within the open end of the tapered sleeve. The tapered collet has an open end for receiving the rodlike member, and an outer diameter which decreases from its open end to its opposite end. The tapered collet is formed with an axial slit starting from its open end and extending along at least a part of its length, permitting said part to contract in diameter in order to firmly clamp the rodlike member when received in the tapered collet and the tapered collet is received within the tapered sleeve.

A depressible button is carried by the housing and has an inner surface engageable with the opposite end of the tapered collet, and an outer surface engageable by a user to depress the button. A spring normally urges the button outwardly of the housing but is depressible to move the tapered collet outwardly of the tapered sleeve, thereby to expand the part of the tapered collet to permit removal of the rodlike member from the tapered collet, or insertion of the rodlike member into the tapered collet. When the rodlike member has thus been inserted into the tapered collet, it is firmly clamped by manually pressing it and the tapered collet into the tapered sleeve.

### SUMMARY OF THE INVENTION

The present invention seeks to provide clamping devices for clamping a rodlike member to a housing, particularly a dental tool to a dental handpiece, which clamping devices may be embodied in a relatively simple, lightweight construction that can be conveniently manipulated in order to remove and insert the rodlike member. A more particular object of the invention of the present application is to provide clamping devices, especially dental handpieces, having a number of advantages over prior art clamping devices and dental handpiece.

According to one preferred feature of the invention in the present application, the open end of the tapered collet terminates short of the open end of the tapered sleeve and a coil spring is carried by the tapered sleeve between its open end and the open end of the tapered collet, the coil spring being coaxial with the tapered sleeve for receiving the rodlike member.

According to more specific aspects of this feature, the coil spring is preferably integrally formed with the tapered collet.

Alternatively, the coil spring and the tapered collet are separate elements. In such a case, a low friction annular seal is preferably located between the coil spring and the tapered collet.

The tapered collet may have axial slits which extend through to the open end thereof. Alternatively, the tapered collet may terminate at a ring at its open end.

There is thus provided in accordance with a preferred embodiment of the present invention a clamping device for clamping a rodlike member to a housing, including:
a sleeve carried by the housing and having an open end;
a collet received within the open end of the tapered sleeve, the collet having an open end for receiving the rodlike member, the open end of the collet terminating short of the open end of the sleeve; and
a coil spring carried by the sleeve between its open end and the open end of the collet, the coil spring being coaxial with the sleeve for receiving the rodlike member.

Preferably, the coil spring is integrally formed with the collet.

In accordance with a preferred embodiment of the present invention the coil spring and the collet are separate elements.

Preferably, the clamping device also includes a low friction annular seal located between the coil spring and the collet.

Preferably, the collet is formed with axial slits.

In accordance with a preferred embodiment of the present invention, the axial slits extend through to the open end thereof.

Preferably, the axial slits terminate at a ring at the open end of the collet.

In accordance with a preferred embodiment of the present invention the sleeve is a tapered sleeve having an outer diameter which decreases from its open end to its opposite end; and the collet is a tapered collet having at least one axial slit extending along at least a part of its length, permitting it to contract in diameter in order to firmly clamp the rodlike member when received in the tapered collet and the tapered collet is received within the tapered sleeve.

The clamping device preferably also includes:
a depressible button carried by the housing and having an inner surface engageable with the opposite end of the tapered collet, and an outer surface engageable by a user to depress the button; and
a spring normally urging the button outwardly of the housing but being depressible to move the tapered collet outwardly of the tapered sleeve, thereby to expand the part of the tapered collet to permit removal of the rodlike member from the tapered collet, or insertion of the rodlike member into the tapered collet and firm clamping of the rodlike member in the tapered collet by manually pressing the rodlike member and tapered collet into the tapered sleeve, the open end of the tapered collet terminating short of the open end of the tapered sleeve.

Preferably, the clamping device also includes a pin passing through the sleeve and being received within the collet to prevent rotation of the collet within the sleeve.

In accordance with a preferred embodiment of the present invention, the sleeve is carried by an air turbine rotatably mounted to the housing by a ball bearing assembly at the inner end of the sleeve, and an air bearing assembly at the outer end of the sleeve.

Preferably, the housing is at one end of a dental handpiece for clamping the rodlike shaft of a dental tool, the dental handpiece including an air turbine for rotating the dental tool.

In accordance with a preferred embodiment the present invention, the end of the dental handpiece opposite to that clamping the distal tool is received within a connector of an air supply line for driving the air turbine.

Further features and advantages of the invention will be apparent from the description below.

### BRIEF DESCRIPTION OF THE DRAWINGS

The invention is herein described, by way of example only, with reference to the accompanying drawings wherein:
Fig. 1 is a longitudinal sectional view illustrating one form of dental handpiece constructed and operative in accordance with a preferred embodiment of the present invention;
Fig. 2 is an enlarged sectional view illustrating the clamping device construction at the end of a handpiece for clamping shafts of various dental tools in accordance with a preferred embodiment of the present invention;
Fig. 3 is a sectional view along line III-III of Fig 2;
Fig. 4 is a partially sectional view of a tapered collet employed in the embodiment of Figs. 2 and 3;
Fig. 5 is a sectional illustration taken along line V - V in Fig. 4;
Fig. 6 is a sectional illustration taken along line VI- VI in Fig. 4;
Fig. 7 is an enlarged sectional view illustrating the clamping device construction at the end of a handpiece for clamping shafts of various dental tools in accordance with another embodiment of the present invention;
Fig. 8 is a sectional view of a tapered collet employed in the embodiment of Fig. 7;
Fig. 9 is a sectional illustration taken along line IX - IX in Fig. 8;
Fig. 10 is a partially cut away side view illustration of a coil spring employed in the embodiment of Fig. 7;
Fig. 11 is an enlarged sectional view illustrating the clamping device construction at the end of a handpiece for clamping shafts of various dental tools in accordance with yet another embodiment of the present invention;
Fig. 12 is a sectional view of a tapered collet employed in the embodiment of Fig. 11;
Fig. 13 is a sectional illustration taken along line XIII - XIII in Fig. 12;
Fig. 14 is a sectional illustration taken along line XIV - XIV in Fig. 12;
Fig. 15 is a partially cut away side view illustration of a coil spring employed in the embodiment of Fig. 11;
Fig. 16 is an enlarged sectional view illustrating the clamping device construction at the end of a handpiece for clamping shafts of various dental tools in accordance with still another embodiment of the present invention;
Fig. 17 is a sectional view of a tapered collet employed in the embodiment of Fig. 16;
Fig. 18 is a sectional illustration taken along line XVIII - XVIII in Fig. 17; and
Fig. 19 is a partially cut away side view illustration of a coil spring employed in the embodiment of Fig. 11.

### DETAILED DESCRIPTION OF PREFERRED EMBODIMENTS

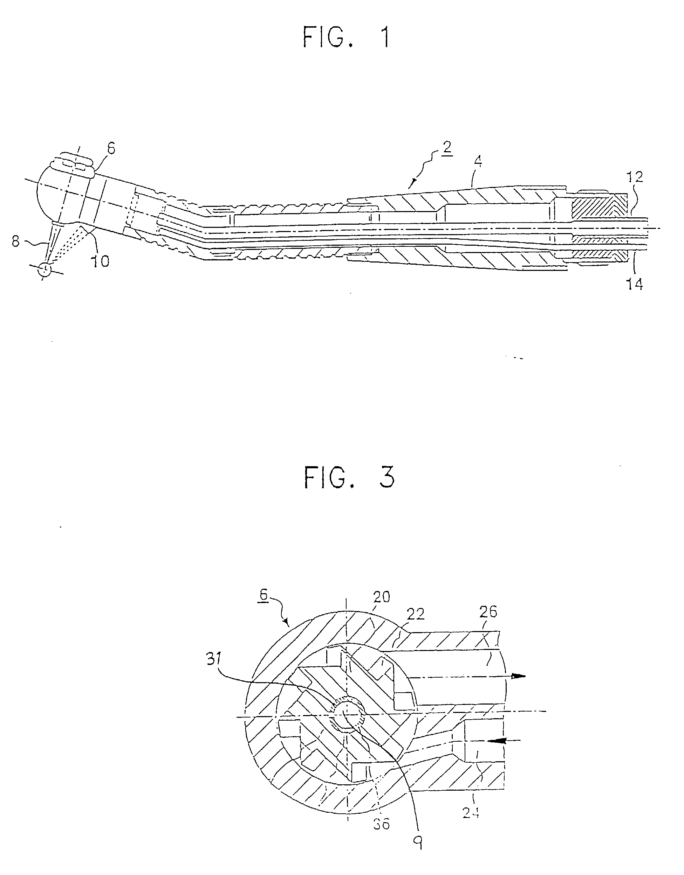

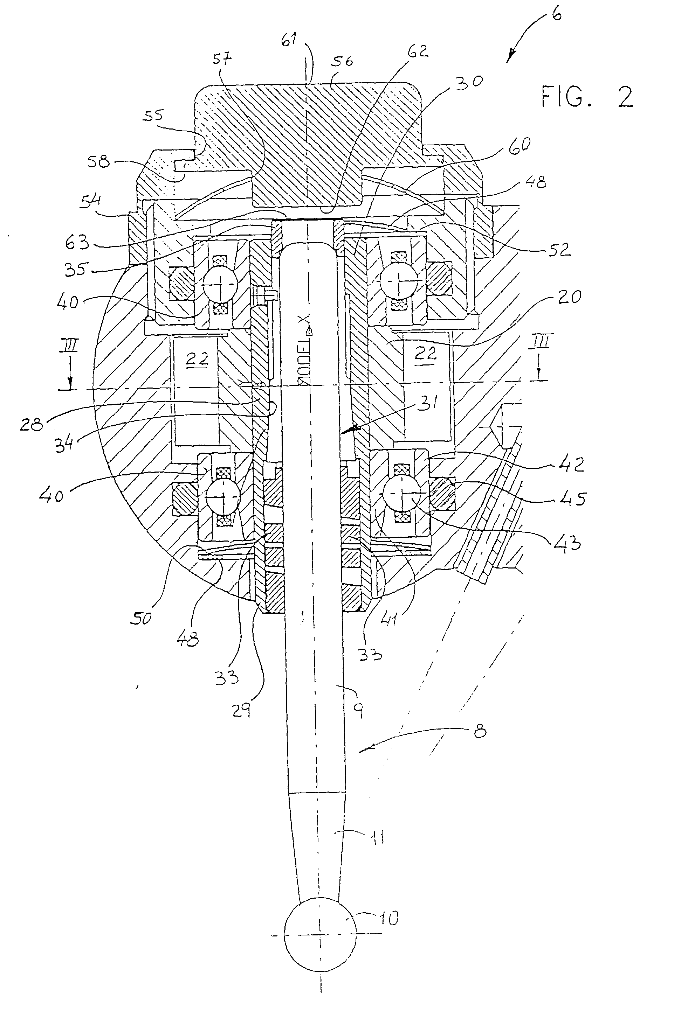

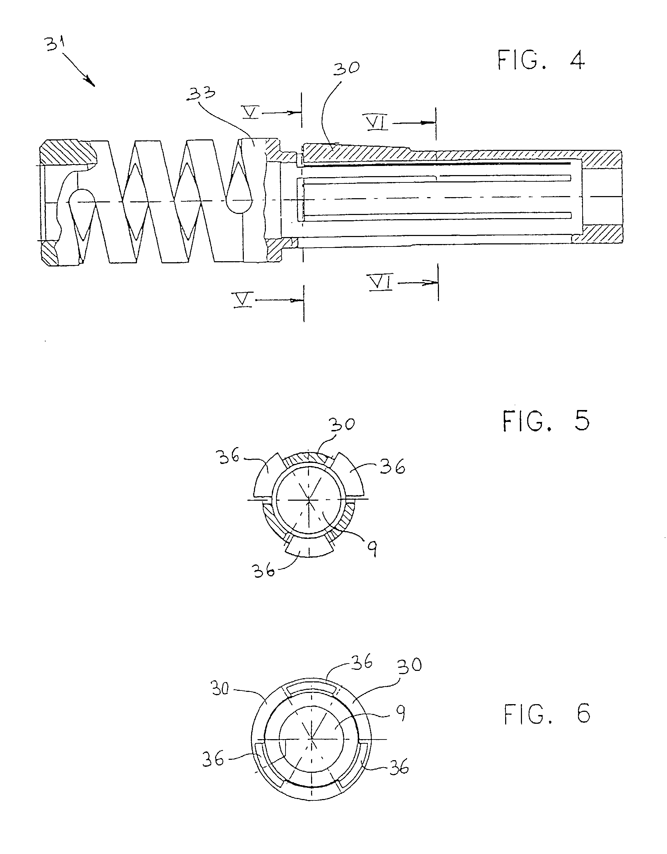

Reference is now made to Figs. 1 - 6, which illustrate a dental handpiece constructed and operative in accordance with a preferred embodiment of the present invention. It is appreciated that the clamping device of the present invention is not limited in its use to dental handpieces. However, since a principal use of the clamping device is in dental handpieces, the clamping device of the present invention is described in the context of a dental handpiece.

The dental handpiece of Figs. 1 - 3 includes a housing, generally designated 2, having a hand-gripping section 4 at one end, and a tool-holding section 6 at the opposite end for holding a dental tool 8, such as a bur or drill. Section 6 of housing 2 is further formed with a water spray nozzle 10 for discharging a water spray onto the site being worked by the dental tool 8.

The dental handpiece illustrated in Fig. 1 is an air turbine handpiece in which compressed air is supplied, via a conduit 12 at the back end of the handpiece, to an air turbine within housing section 6 to rotate the dental tool 8 at a very high speed, e.g. in the order of 400,000 rpm. The rear end of the dental handpiece includes a further conduit 14 for introducing water discharged in the form of a spray via nozzle 10 onto the working site of the dental tool.

In general such dental handpieces are well known, and therefore further details of the construction are not set forth herein. The remainder of the description will, therefore, be directed primarily to the construction of the housing section 6, and particularly to the clamping device within this housing section for clamping and removing the dental tool 8, as more particularly illustrated in Figs. 2 and 3.

Fig. 2 shows, for purposes of example, the dental tool 8 as being of the bur type, including a shaft 9 of uniform diameter at one end, a bur 10, typically of spherical shape at the opposite end, and a tapered juncture 11 between the shaft 9 and the bur 10. It will be appreciated, however, that the dental tool 8 could be of any other suitable type, e.g., a drill carried at the end of the shaft.

As shown particularly in Fig. 3, housing section 6 includes an air turbine 20 formed with a plurality of blades 22 impinged by compressed air flowing from an inlet conduit 24 to an outlet conduit 26 in order to rotate the air turbine at a very high speed. Air turbine 20 is integrally formed with or fixed to a sleeve 28 of tapered configuration. One end of sleeve 28 is open, as shown at 29, for receiving the shaft 9 of the dental tool 8. The inner diameter of tapered sleeve 28 decreases from its open end 29 to its opposite end 30, which is also open.

Tapered sleeve 28 receives a tapered collet assembly 31. Tapered collet assembly 31 is formed with an open end 32 received within the open end 29 of the tapered sleeve 28 for receiving the shaft 9 of the dental tool 8.

In accordance with a preferred embodiment of the present invention, tapered collet assembly 31 is integrally formed with a coil spring portion 33 adjacent the open end 32 thereof and which is located adjacent open end 29 of the sleeve 28. Coil spring portion 33 is typically retained within sleeve 28 by the undercut configuration of the open end 29 thereof.

The coil spring portion 33 has a generally uniform outer diameter. The outer diameter of tapered collet 30 decreases from the coil spring portion 33 at a tapered region 34, wherein the taper may have a ratio typically in the range of 1:5 to 1:12. The opposite end 35 of the collet assembly 31 is typically annular.

Collet assembly 31 is preferably formed with three axial slits 36, equally-spaced around its circumference as shown in Figs. 3 - 6. Slits 36 start just beyond coil spring portion 33 and extend nearly to opposite end 35.

It is appreciated that a greater or lesser number of slits may be provided. As will be described more particularly below, the slits 36 permit the slitted portion of the collet assembly to contract in order to firmly clamp therein the shaft 9 of the dental tool, or to expand in order to release the shaft for purposes of removing the dental tool or reinserting another dental tool in its place.

Housing section 6 further includes two ball bearing assemblies 40, located at the opposite sides of the axis of housing section 6 for rotatably mounting the air turbine 20, its sleeve 28, the collet assembly 31, and the dental tool 8 when clamped therein, with respect to the housing. Each ball bearing assembly 40 typically includes a rotary ring 41, a static ring 42, and a plurality of balls 43 interposed between rings 41 and 42.

Housing section 6 further includes a vibration absorbing O-ring 44 for each of the ball bearing assemblies 40. Each O-ring 44 is received within an annular recess 45, formed in housing section 6 and bearing against the static ring 42 of the respective assembly.

Housing section 6 further includes a spring 48 bearing against a plastic ring 50, typically formed of "TEFLON" (Reg. TM) for preloading the static part of the bearing in order to reduce vibration during the high-speed rotation of the dental tool. A similar plastic ring 52 is provided at the opposite end of the housing section 6 cooperable with bearing assembly 40.

Housing section 6 is typically closed by a collar 54 threadedly attached thereto. Collar 54 is preferably formed with a central opening 55 through which projects a release button 56.

Button 56 is formed with an outwardly-projecting rim 58 around its circumference, which rim is engageable by the edge of collar 54 circumscribing opening 55. An annular spring 60 is interposed between the housing section 6 and button 56. Spring 60 is engaged with an inner portion 57 of the button to urge the button outwardly, limited by the engagement of rim 58 of the button with the undersurface of collar 54.

Button 56, however, is depressible inwardly of the housing section 6 against spring 60, by pressing against an outer surface 61 of the button, to bring an inner surface 62 of the button into engagement with a facing surface 63 of end 35 of the collet assembly 31, thereby to urge the collet assembly 31 towards the open tapered end of sleeve 28, thereby compressing the coil spring portion 33, which is retained within the sleeve.

It will thus be seen that in order to remove the dental tool 8 from the housing section 6, the outer surface 61 of release button 56 is manually engaged to depress the button against the action of spring 60. This causes the inner surface 62 of button 56 to engage the facing surface 63 of end 35 of the collet assembly 31, and to move the slip portion of the collet assembly towards the open end of sleeve 28.

When this occurs, the slits 36 formed in the collet assembly 3 permit the slit portion of the collet to expand and thereby to release the shaft 9 of the dental tool. The dental tool may then be manually grasped and removed from the collet assembly 31.

When it is desired to insert another dental tool 8, button 56 is again depressed to move the slit portion of the collet assembly 31 towards the open end of sleeve 28, thereby providing a relatively large diameter for the tapered collet to receive the shaft 9 of the dental tool 8. While the button is still depressed, the dental tool is pushed inwardly into the collet assembly 31 until the end of the dental tool shaft 9 engages the end 35 of the collet assembly. At that time, button 56 is released, whereupon spring 60 moves the button 56 slightly outwardly of the housing in a direction facing opposite to the open end 29 of sleeve 28.

The user then manually pushes the dental tool shaft 9 further inwardly into the housing. This also moves the collet assembly 31 further into the housing, until surface 63 of the end 35 of the collet assembly engages inner surface 62 of the button 56, at which time the dental tool 8 is firmly clamped in housing section 6 by the wedging action between the collet assembly 31 and the sleeve 28.

In a preferred construction, the collet assembly 31 may be formed of 303 stainless steel or titanium, PH 17-4 or 17-5 spring stainless steel or Stavax 420 F. The housing 4, including housing section 6, the air turbine 20 including its blades 22 and its sleeve 28, and the tapered collet 30, may all be made of anodized aluminum or titanium.

It is a particular feature of the present invention that provision of a coil spring adjacent the open end of the sleeve 28 provides enhanced stability against vibration during operation and thus enhanced patient comfort.

The coil spring urges the collet assembly inwardly of the tapered sleeve 28. Such a construction has been found to more positively assure that the tapered collet will be securely clamped within the tapered sleeve in case the user neglects to manually push the dental tool shaft 8a further inwardly into the housing, after button 56 has been released as described above. If this should occur, coil spring will start the inward movement of the collet, which inward movement will be completed by the normal use of the dental device.

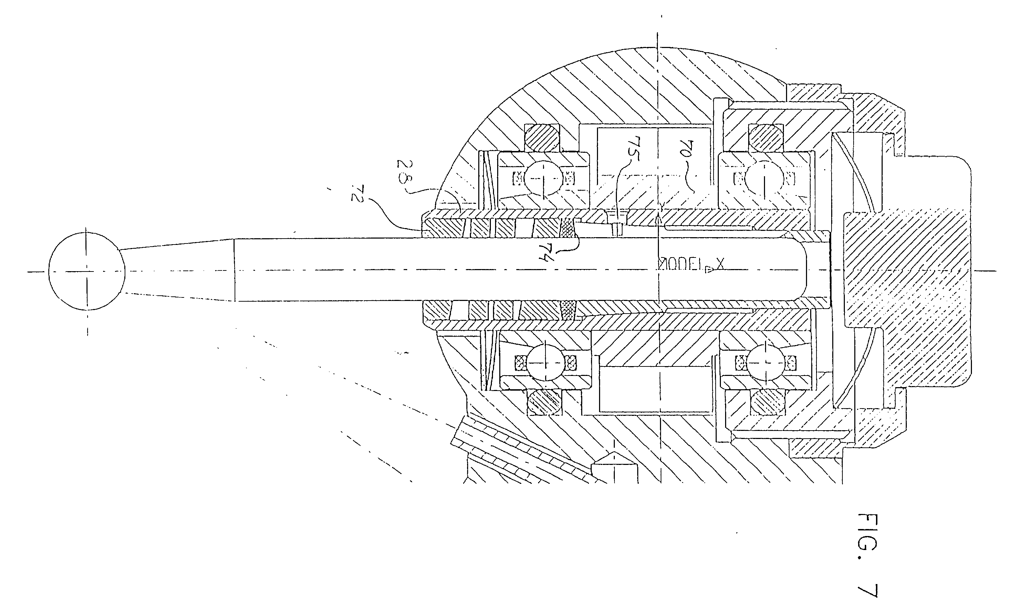

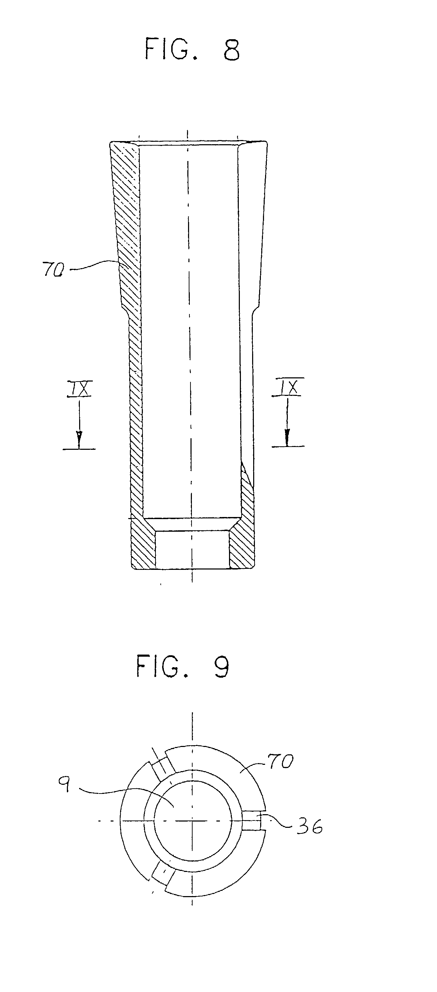

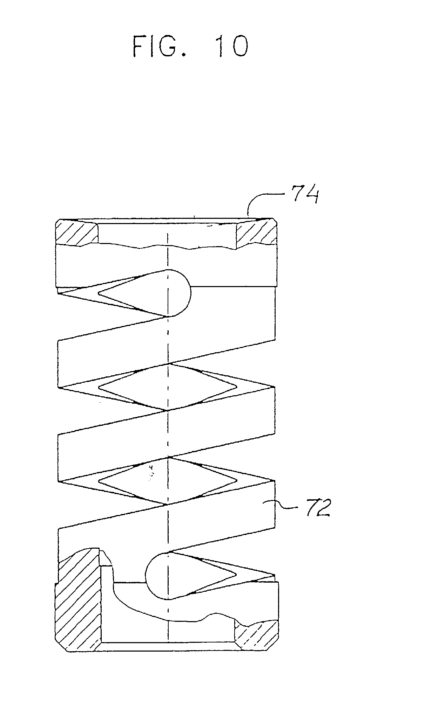

Reference is now made to Figs. 7 - 10, which illustrate another embodiment of dental handpiece constructed and operative in accordance with a preferred embodiment of the present invention. To facilitate understanding, those elements of the handpiece which are common to the elements described above with respect to Figs. 1 - 6 bear the same reference numerals, and only the modified or new elements are described below.

The embodiment of Figs. 7 - 10 differs from that of Fig. 1 - 6 in that the collet assembly 31 of Figs. 1 - 6 which is integrally formed with a coil spring portion is replaced in the embodiment of Figs. 7- 10 by a discrete tapered collet 70 and a discrete coil spring 72 which are separated by a low friction sealing ring 74, typically formed of Acetal or TEFLON (Reg. TM). It is noted that sealing ring 74 tapered opposite surfaces and narrows towards its outer diameter.

In the embodiment of Figs. 7 - 10, the tapered collet 70, does not extend completely to the open end 29 of the tapered sleeve 28, but rather terminates short of the open end of the tapered sleeve. Coil spring portion 72 is disposed between the tapered collet 70 and the open end 29 and sealing ring 74 is disposed between collet 70 and the coil spring 72. Both coil spring 72 and sealing ring 74 are coaxial with the tapered sleeved 28 for receiving the dental tool 8.

A pin 75 preferably passes through the tapered sleeve 28 and is received within one of the three axial slits 36 of the tapered collet 70. Pin 75 more securely holds the tapered collet 70 against rotational movement within the tapered sleeve 28.

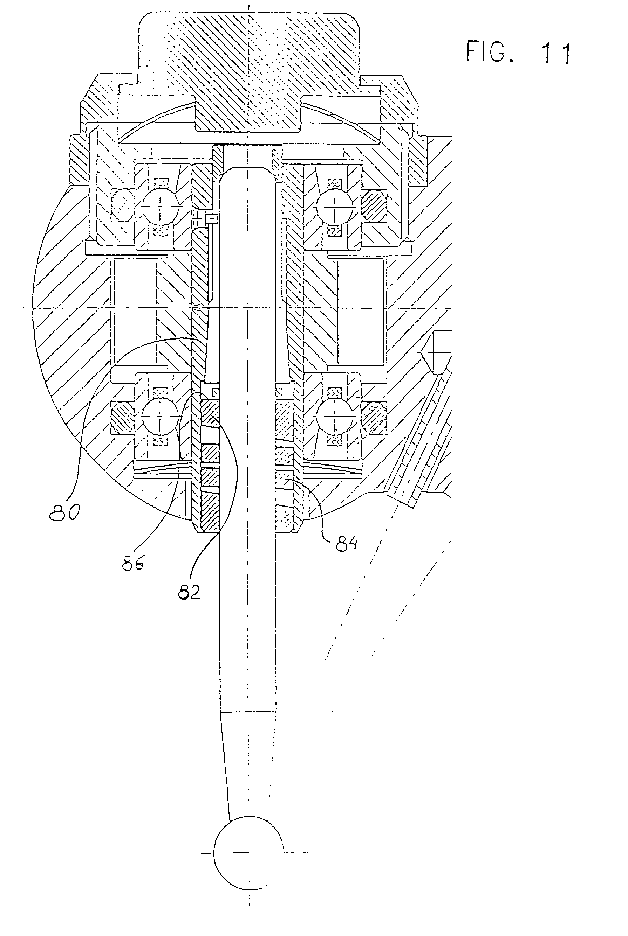

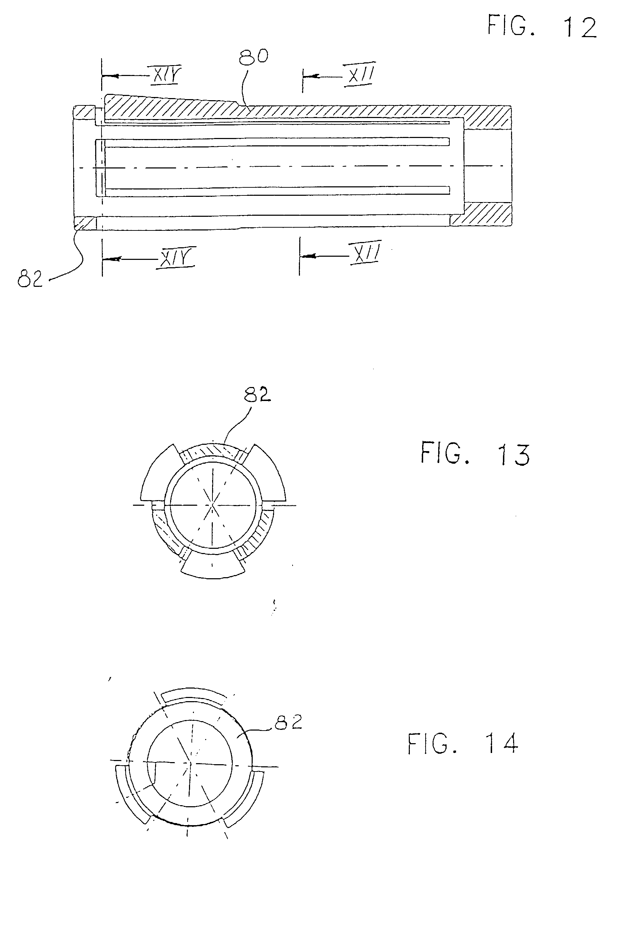

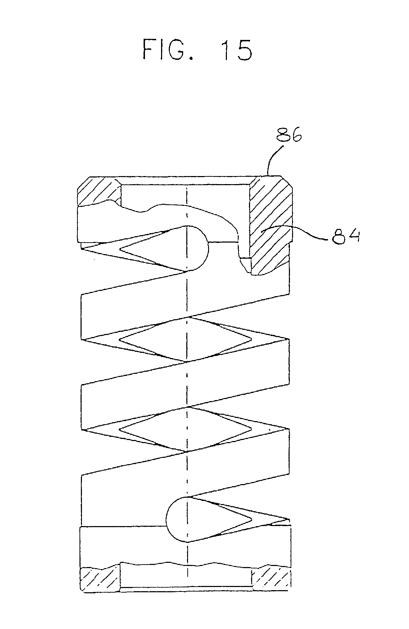

Reference is now made to Figs. 11 - 15, which illustrate yet another embodiment of dental handpiece constructed and operative in accordance with a preferred embodiment of the present invention. To facilitate understanding, those elements of the handpiece which are common to the elements described above with respect to Figs. 7 - 10 bear the same reference numerals, and only the modified or new elements are described below.

The embodiment-of Figs. 11 - 15 differs from that of Fig. 7 - 10 in that the tapered collet 70 of Figs. 7 - 10 which is slit all the way to its open end is replaced in the embodiment of Figs. 11 - 15 by a tapered collet 80 whose open end is defined by a solid ring 82. The sealing ring 74 of the embodiment of Figs. 7 - 10 is eliminated and the coil spring 72 of the embodiment of Figs. 7 - 10 which had a tapered end adjacent the sealing ring 74 is replaced by a coil spring 84 having a generally flat end surface 86 adjacent ring 82.

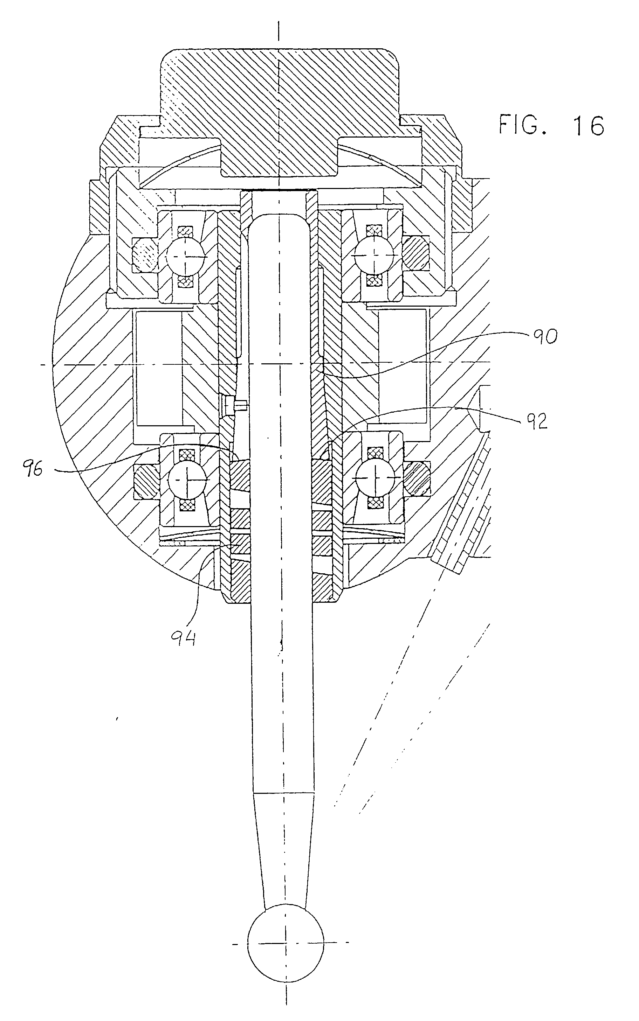

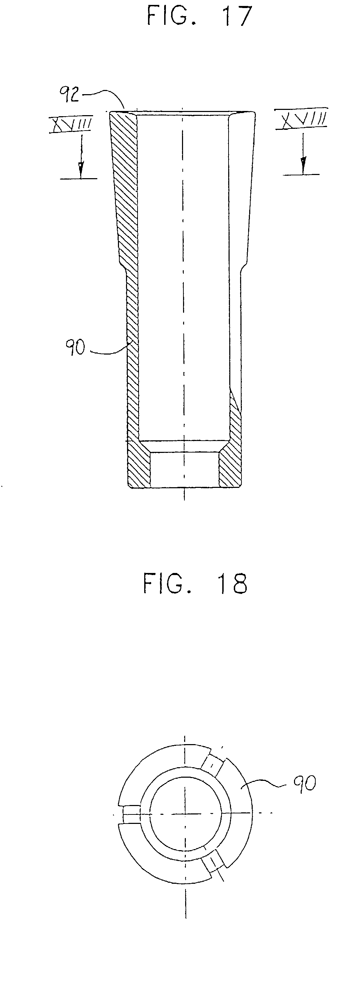

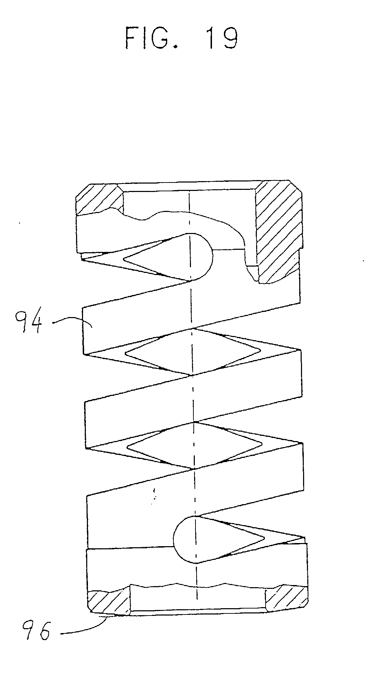

Reference is now made to Figs. 16 - 19, which illustrate another embodiment of dental handpiece constructed and operative in accordance with a preferred embodiment of the present invention. To facilitate understanding, those elements of the handpiece which are common to the elements described above with respect to Figs. 11 - 15 bear the same reference numerals, and only the modified or new elements are described below.

The embodiment of Figs. 16 - 19 differs from that of Fig. 11 - 15 in that the tapered collet 80 of Figs. 11 - 15, whose open end is defined by a solid ring 82 is replaced by a tapered collet 90 which is slit all the way to its open end. The open end 92 of collet 90 is tapered radially outwardly so as to increasingly extend toward an adjacent coil spring 94. Coil spring 94 has a correspondingly tapered end surface 96 adjacent open end 92 to enhance mutual slidability thereof.

It will be appreciated by persons skilled in the art that the present invention is not limited by what has been particularly shown and described hereinabove. Rather the scope of the present invention includes both combinations and subcombinations of the various features described hereinabove as well as modifications and variations thereof which would occur to persons skilled in the art upon reading the above description and which are not in the prior art.

## Claims

1. A clamping device for clamping a rodlike member to a housing,
characterized by comprising:
a sleeve carried by said housing and having an open end;
a collet received within said open end of the tapered sleeve, said collet having an open end for receiving the rodlike member, the open end of the collet terminating short of the open end of the sleeve; and
a coil spring carried by the sleeve between its open end and the open end of the collet, the coil spring being coaxial with the sleeve for receiving the rodlike member.

2. A clamping device according to claim 1 and wherein said coil spring is integrally formed with the collet.

3. A clamping device according to claim 1 and wherein the coil spring and the collet are separate elements.

4. A clamping device according to claim 3 and also comprising a low friction annular seal located between the coil spring and the collet.

5. A clamping device according to any of claims 1 -4 and wherein the collet is formed with axial slits.

6. A clamping device according to claim 5 and wherein the axial slits extend through to the open end thereof.

7. A clamping device according to claim 5 and wherein the axial slits terminate at a ring at the open end of the collet.

8. A clamping device according to any of claims 1 -7 and wherein:
said sleeve is a tapered sleeve having an outer diameter which decreases from its open end to its opposite end; and
said collet is a tapered collet having at least one axial slit extending along at least a part of its length, permitting it to contract in diameter in order to firmly clamp the rodlike member when received in the tapered collet and the tapered collet is received within the tapered sleeve.

9. A clamping device according to claim 8 and also comprising:
a depressible button carried by said housing and having an inner surface engageable with said opposite end of the tapered collet, and an outer surface engageable by a user to depress the button; and
a spring normally urging said button outwardly of the housing but being depressible to move the tapered collet outwardly of the tapered sleeve, thereby to expand said part of the tapered collet to permit removal of the rodlike member from the tapered collet, or insertion of the rodlike member into the tapered collet and firm clamping of the rodlike member in the tapered collet by manually pressing the rodlike member and tapered collet into the tapered sleeve, the open end of said tapered collet terminating short of the open end of said tapered sleeve;

10. A clamping device according to any of claims 1 - 9 and also including a pin passing through said sleeve and being received within said collet to prevent rotation of said collet within said sleeve.

11. A clamping device according to any of claims 1 -10 wherein said sleeve is carried by an air turbine rotatably mounted to said housing by a ball bearing assembly at the inner end of the sleeve, and an air bearing assembly at the outer end of the sleeve.

12. A clamping device according to any of claims 1- 11 wherein said housing is at one end of a dental handpiece for clamping the rodlike shaft of a dental tool, said dental handpiece including an air turbine for rotating said dental tool.

13. A clamping device according to claim 12, wherein the end of said dental handpiece opposite to that clamping said distal tool is received within a connector of an air supply line for driving said air turbine.
